# EUROPEAN PATENT SPECIFICATION

(11) **EP 3 528 366 B1**
(45) Date of publication and mention of the grant of the patent: **04.05.2022**
(21) Application number: 17870107.4
(22) Date of filing: 10.11.2017
(51) Int. Cl.: H02K 1/17, H02K 1/27

(54) **MOTOR COMPRISING HALBACH ARRAY AND APPARATUS COMPRISING SAME**
MOTOR MIT EINER HALBACH-ANORDNUNG UND VORRICHTUNG DAMIT
MOTEUR COMPRENANT UN RÉSEAU DE HALBACH ET APPAREIL LE COMPRENANT

(30) Priority: 11.11.2016 CN 201610994572
(43) Date of publication of application: 21.08.2019
(73) Proprietor: Novomoto Limited, Hong Kong 999077 (CN)
(72) Inventor: HO, Kwok Pun, Hong Kong 999077 (CN)
(74) Representative: Manitz Finsterwald Patent- und Rechtsanwaltspartnerschaft mbB
(86) International application number: PCT/CN2017/110443
(87) International publication number: WO 2018/086586

(56) References cited:
- CN-A- 101 707 405
- CN-A- 102 570 754
- CN-A- 102 570 754
- CN-A- 103 166 406
- CN-A- 103 647 423
- CN-A- 104 333 150
- CN-A- 106 849 409
- CN-U- 206 712 560
- DE-A1-102013 225 093
- JP-A- 2015 142 471
- JP-A- 2016 163 366
- US-A1- 2002 180 295

## Description

### Technical Field

The present disclosure relates to the field of motor technology, and in particular, to a motor comprising HALBACH array and an apparatus comprising same. The features of the preamble of the independent claim are known from US 2002/180295 A1. Related technologies are known from JP 2015 142471 A, CN 102 570 754 A, DE 10 2013 225093 A1 and CN 103 166 406A.

### Background

Recently, in the field of permanent magnet motors, tooth structures and groove structures on the opposite surfaces of the stator and/or the rotator are generally used to place a single permanent magnet in the groove, but the motor using the structure tends to have a small torque density, with the development of the industry robot, motors that can achieve high torque densities are required, while the motors with the above-mentioned structure cannot meet the requirements.

In order to achieve high torque density, HALBACH array permanent magnets have been used. HALBACH array permanent magnets utilize the superposition and cancellation of the magnetic field in the middle superimposed and offset, so that the magnetic field strength of the single side is enhanced, and the air gap magnetic density of the motor can be improved. Thus, the HALBACH array permanent magnets have been widely used in the field of permanent magnet motors, as mentioned in the Chinese patent NO.CN203278585, as shown in Fig. 6, the rotor of the motor comprises a HALBACH array arranged on the opposite sides of the rotor and the stator, and the HALBACH array adopting such an arrangement requires a plurality of permanent magnets of various magnetization directions to be combined, so that the processing is complicated and costly, and the arrangement of the array requires the permanent magnets located in the middle to be in close contact with each other, which is difficult to be assembled and easily causes damage to the permanent magnets.

### Summary

In order to solve the above problems, the present invention is defined by claim 1 and provides a motor comprising HALBACH array and an apparatus comprising same, a plurality of HALBACH array permanent magnet units are respectively distributed in grooves of a stator and a rotator to form a simple HALBACH array arrangement. Therefore, the torque density of the motor can be improved, the mass production of the permanent magnet can be facilitated, the production cost can be reduced, and the installation can be facilitated and not easily to be damaged.

A first aspect of the present disclosure provides a motor with an assembly of a stator and a rotator, a plurality of tooth structures and groove structures are formed on the opposite surfaces of the stator and the rotator, the motor further comprises a plurality of HALBACH array permanent magnet units distributed in the plurality of grooves of the stator and the rotator.

Further, each of the HALBACH array permanent magnet units has the same shape, and a direction of a formed single-sided magnetic field corresponds to a gap between the rotator and the stator.

Further, one end of permanent magnets at least located at both sides of the HALBACH array permanent magnet units distributed in each of the grooves which is close to the opposite surface of the stator or the rotator is at a distance lower than the same end of a permanent magnet located in the middle.

Further, a height ratio of the height of each of the permanent magnets located at both sides to the permanent magnet located in the middle is in a range of 1:1.5 to 1:1.9.

Further, a width of the permanent magnet located in the middle of each of the HALBACH array permanent magnet units is larger than a width of the permanent magnets located at both sides of each of the HALBACH array permanent magnet units.

Further, a ratio of the width of the permanent magnet located in the middle to the width of each of the permanent magnets located at both sides is 2.5:1.

Further, each of the HALBACH array permanent magnet units includes: at least a first permanent magnet, a second permanent magnet, and a third permanent magnet which are arranged in a lateral direction.

Further, the plurality of HALBACH array permanent magnet units distributed in the plurality of grooves of the stator and the rotator include:
a HALBACH array permanent magnet unit distributed in each groove or in every several grooves; or
a plurality of HALBACH array permanent magnet units distributed in each groove or in every several grooves.

A second aspect of the present disclosure provides an apparatus comprising the motor as described above.

As can be seen from the above, the present invention provides the motor in which a plurality of HALBACH array permanent magnet units are respectively distributed in the grooves of the stator and the rotator to form a simple HALBACH array arrangement, which achieves the following technical effects:
1. The plurality of HALBACH array permanent magnet units are distributed in each groove of the stator and the rotator due to the plurality of teeth and groove structures formed on opposite sides of the stator and the rotator, forming the simple HALBACH array arrangement, which can improve the torque density of the motor, facilitate the mass production of the permanent magnets, reduce the production cost, and is easy to be installed and not easily to be damaged.
2. Since the shape of each HALBACH array permanent magnet unit is the same, in order to ensure that the direction of the formed single-sided magnetic field corresponds to the gap between the rotator and the stator, only the installation direction of the permanent magnets constituting the HALBACH array unit need to be adjusted, so mass production can be completed to the maximum extent, ensuring the convenience of installation and product consistency.
3. Since the first permanent magnet and the third permanent magnet are located at least one end of the opposite side of the rotator or the stator is lower than the same end of the second permanent magnet, by adopting the above structure, on the one hand, since the area affected by the reverse magnetization is removed, the entire HALBACH array permanent magnet is not demagnetized, which affects the stability of the entire motor; on the other hand, since some of the permanent magnet structures are removed, the mass of each group of HALBACH arrays can be relatively reduced, thus reducing the weight of the motor to a certain extent.
4. Since the width of the permanent magnet located in the middle of each HALBACH array permanent magnet is larger than the width of the permanent magnets located on both sides of each HALBACH array permanent magnet, a better sinusoidal magnetic field can be formed.

### Brief Description of Drawings

In order to more clearly illustrate the technical solutions of the embodiments of the present disclosure, the drawings used in the embodiments and the prior art description will be briefly described below. Obviously, the drawings in the following description are only some implementations of the present disclosure. For example, other drawings may be obtained by those skilled in the art without any inventive effort based on the following drawings.
Fig.1 (not part of the invention) is a partial structural schematic view of a linear motor according to an embodiment of the present disclosure;
Fig.2 is a schematic structural diagram of a rotating motor according to an embodiment of the present invention, wherein the right side illustrates an enlarged schematic view of a portion A;
Fig.3A-Fig.3D are schematic diagrams showing several embodiments of a magnetic flux direction on each HALBACH array permanent magnet according to embodiments of the present invention;
Fig.4A-Fig 4D are schematic diagrams of several embodiments of each HALBACH array permanent magnet according to embodiments of the present invention;
Fig.5 (not part of the invention) is a schematic diagram of an embodiment of a motor according to an embodiment of the present disclosure;
Fig.6 illustrates a magnetic density change of each permanent magnet in a HALBACH array permanent magnet according to an embodiment of the present disclosure;
Fig.7A-Fig.7B are schematic diagrams illustrating two embodiments of a HALBACH array permanent magnet according to embodiments of the present invention;
Figure 8 is a top plan view of a conventional motor.

### Detailed Description

In order to enable those skilled in the art to better understand the solution of the present disclosure, the technical solutions in the embodiments of the present disclosure will be clearly and completely described in the following with reference to the drawings in the embodiments of the present disclosure. It is apparent that the described embodiments are merely a part of the embodiments of the disclosure, and not all of the embodiments. All other embodiments obtained by a person of ordinary skill in the art based on the embodiments of the present disclosure without departing from the inventive scope of claim 1 should fall within the scope of the present invention as defined by claim 1.

### Embodiment 1

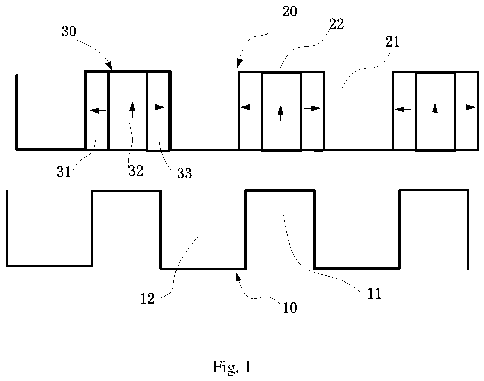

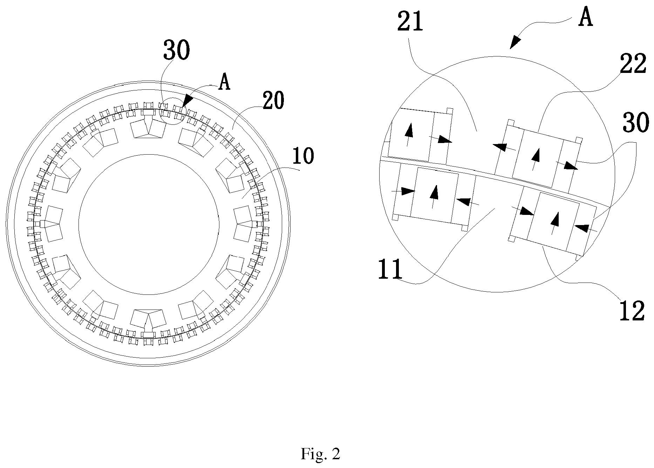

Fig.1 (not part of invention) is a schematic structural diagram of a portion of a linear motor according to an embodiment of the present disclosure; Fig.2 is a schematic structural view of a rotating motor according to an embodiment of the present invention, wherein the right side is an enlarged schematic view of a portion A.

In the field of permanent magnet motors, there are currently permanent magnet motors employing HALBACH arrays, as described in the background, in which the opposite surfaces of the rotor and stator are enclosed by a HALBACH array. The HALBACH array adopting such an arrangement requires a plurality of permanent magnets of various magnetization directions to be combined, and the processing thereof is complicated, and the arrangement of the array requires the permanent magnets located in the middle to be in close contact with each other, so that it is difficult to be assembled and easily cause damage to permanent magnets.

As shown in Fig.1 (not part of invention) and Fig.2, in order to solve the above problems, the present disclosure provides a motor including an assembly of a stator 10 and a rotator 20, and a plurality of tooth 11, 21 structures and groove 12, 22 structures are formed on the opposite surfaces of the stator 10 and the rotator 20. The grooves 12, 22 are configured such that a plurality of HALBACH array permanent magnets 30 are distributed within each groove of the stator 10 and the rotator 20.

Since the plurality of HALBACH array permanent magnet units are respectively distributed in the grooves of the stator and the rotator to form a simple HALBACH array arrangement, the torque density of the motor can be improved (compared with the conventional motor with a single permanent magnet, with a whole permanent magnet of the same size, the torque of the motor using the structure of the disclosure is 2.5 times of that of the existing motor), which also contributes to the mass production of the permanent magnet, reduces the production cost, and is convenient to be installed and not easily to be damaged.

It should be noted that the motor may include an electric motor that converts electrical energy into kinetic energy output (the electric motor may include: a rotary motion rotary motor, a linear motion linear motor); and may also include an electric generator that converts kinetic energy into electrical energy output. In some cases, the two can be realized by the same structure, and the functions of the generator or the motor are respectively realized by adopting different electrical connections and mechanical connections to the same structure.

In some exemplary embodiments, the shapes of the respective HALBACH array units are the same, so that the requirements of mass production can be satisfied to the greatest extent, just adjusting installation directions of the permanent magnets that make up each of the HALBACH array permanent magnet units according to the direction of single-sided magnetic field generated by each HALBACH array permanent magnet units during installing is required to enable the single-sided magnetic field generated by each of the HALBACH array permanent magnet units installed on the stator and/or the rotator corresponds to the gap direction of the stator and the rotator(as the magnetic flux direction shown in the enlarged view on the right side of Fig. 2). In addition to the exemplary manners, the shape of each HALBACH array permanent magnet unit does not have to be the same, for example, the HALBACH array unit located in the stator grooves can be different in shape from the HALBACH array unit located in the rotator grooves, just ensuring the single-sided magnetic field generated by the HALBACH array on the stator and the rotator corresponds to the gap direction of the rotator and the stator. The single-sided magnetic field formed by the upper HALBACH array may correspond to the gap direction of the rotator and the stator.

It should be noted that the opposite surfaces of the stator and the rotator form a plurality of teeth and a plurality of grooves, and preferably, the plurality of HALBACH array permanent magnet units are respectively distributed in the grooves of the stator and the rotator as shown in Fig. 2, so that a greater torque density of the motor can be achieved to a greater extent. When such an arrangement is adopted, it is only necessary to ensure that the single-sided magnetic field formed by each of the HALBACH array permanent magnet units on the stator and the rotator corresponds to the gap direction of the rotator and the stator.

It should be further noted that, in each of the foregoing setting manners, it is preferable that at least one HALBACH array unit is distributed in each groove of the stator and the rotator (that is, one HALBACH array is distributed in each groove, or a plurality of HALBACH array units are distributed in each groove); or it is not necessary to distribute one HALBACH array unit in each groove, for example, at least one HALBACH array unit is distributed every several grooves.

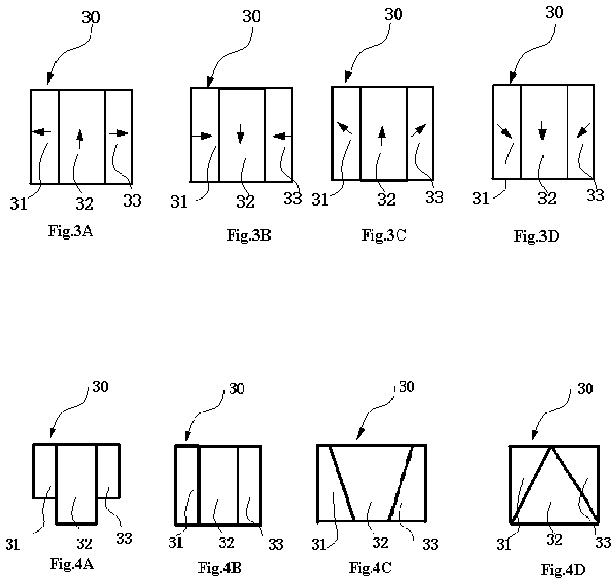

Fig.3A-Fig.3D are schematic diagrams illustrating several embodiments of magnetic flux directions on each of the HALBACH array permanent magnets according to some embodiments of the present invention.

Fig.4A-Fig.4D are schematic diagrams illustrating several embodiments of each of the HALBACH array permanent magnets according to some embodiments of the present invention. As shown in Fig. 1 (not part of invention) , each of the HALBACH array permanent magnets 30 includes: at least a first permanent magnet 31, a second permanent magnet 32, and a third permanent magnet 33 which are arranged in a lateral direction.

The first permanent magnet 31 includes a first magnetic flux direction,

The second permanent magnet 32 includes a second magnetic flux direction,

The third permanent magnet 33 includes a third magnetic flux direction.

The first magnetic flux direction, second magnetic flux direction, and third magnetic flux direction may be any combination of directions satisfying the HALBACH array principle, so that the single-sided magnetic field generated by the combined HALBACH array corresponds to the gap between the stator and the stator. In the present embodiment, as shown in Fig.3A-Fig.3D, the second magnetic flux direction is preferably perpendicular (either completely perpendicular or approximately perpendicular) to the opposite surfaces of the stator or the rotator, and the first magnetic flux direction and the third magnetic flux direction are mutually symmetrical or antiparallel.

As shown in Fig.4A-Fig.4D, the respective permanent magnets constituting the HALBACH array can be designed in various shapes as needed.

As shown in Fig.4A and Fig.4B, the shapes of the first permanent magnet, the second permanent magnet, and the third permanent magnet are preferably rectangular.

As shown in Fig.4C, the HALBACH array includes the first permanent magnet, the second permanent magnet, and the third permanent magnet that are respectively trapezoidal.

As shown in Fig.4D, the HALBACH array includes the first permanent magnet, the second permanent magnet, and the third permanent magnet that are respectively triangular.

In addition to the shapes of the first permanent magnet, the second permanent magnet, and the third permanent magnet illustrated in Fig. 4 in the present embodiment, any permanent magnet shape that satisfies the HALBACH array principle is within the scope of the present disclosure.

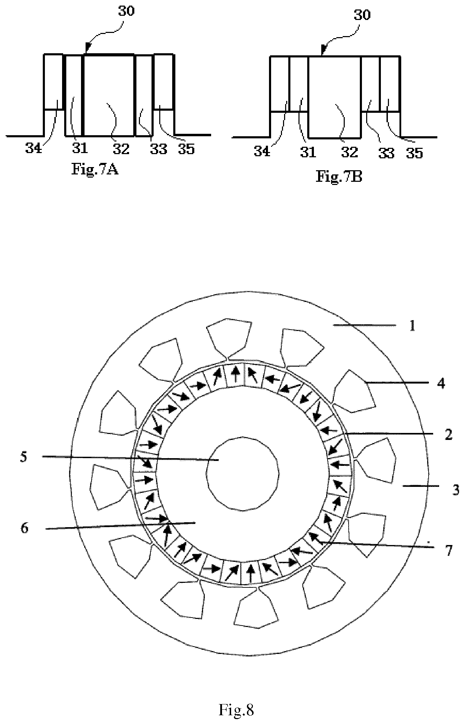

Fig.7A-Fig.7B are schematic diagrams illustrating two embodiments of a HALBACH array permanent magnet according to embodiments of the present invention.

The number of the HALBACH array permanent magnets is preferably three including the first permanent magnet, the second permanent magnet, and the third permanent magnet, but the number of the permanent magnets is not limited to three, and may be five (as shown in Fig.7A, Fig.7B), seven, nine, etc., with the second permanent magnet as the center, any number of equal permanent magnets can be added to both sides. For the other related permanent magnets, reference may be made to the related descriptions of the first and third permanent magnets, and the detailed description thereof will not be repeated here.

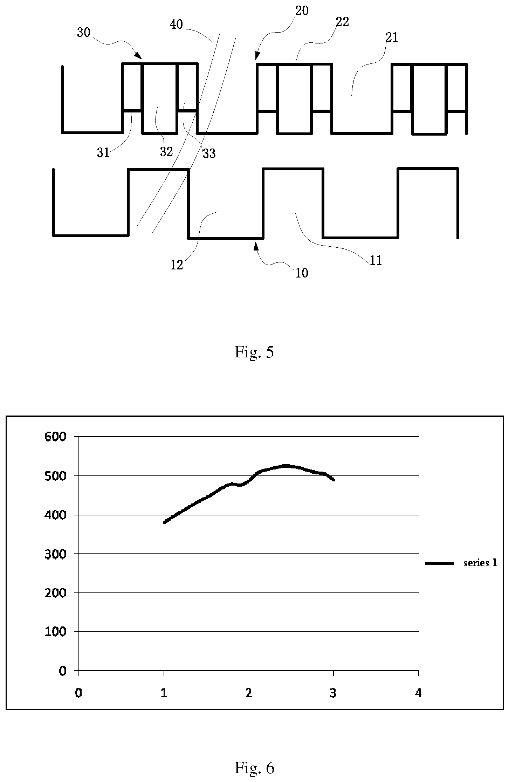

Fig. 5 (not part of invention) is a schematic diagram of an embodiment of a motor according to an embodiment of the present disclosure.

As shown in Fig. 5 (not part of invention) , in some preferred embodiments, in some of the HALBACH array permanent magnets in each groove in a motor with relatively high magnetic density, the ends of the permanent magnets on both sides are subjected to the influence of magnetic lines of flux 40 passing through. When the direction of the magnetic line 40 is different from the direction of the magnetic field of the permanent magnet itself, may cause demagnetization of the permanent magnet, thereby affecting the stability of the entire motor. In order to solve the above problem, the embodiment of the present disclosure preferably has one end of the permanent magnets at least located at both sides of the HALBACH array which is close to the opposite surface of the rotator or the stator at a certain distance lower than the same end of the permanent magnet located in the middle of the HALBACH array.

By adopting the above structure, on the one hand, since the region affected by the demagnetization is removed, the entire HALBACH array permanent magnet is not demagnetized, which affects the stability of the entire motor; on the other hand, due to the removal of part of the permanent magnet structure, the mass of each group of HALBACH array permanent magnets is relatively reduced, thereby reducing the weight of the motor to some extent.

As shown in Fig. 5 (not part of invention) , taking the HALBACH array including three permanent magnets (the first permanent magnet 31, the second permanent magnet 32 and the third permanent magnet 33) as an example, the end of the first permanent magnet 31 and the end of the third permanent magnet 33 close to the opposite surface the rotator or the stator are at a certain distance lower than the same end of the second permanent magnet 32.

The HALBACH array permanent magnet includes five permanent magnets(the first permanent magnet 31, the second permanent magnet 32, the third permanent magnet 33, the third permanent magnet 34 and the third permanent magnet 35), preferably as illustrated in Fig.7A, the end of the fourth permanent magnet 34 and the end of the five permanent magnet 35 close to the opposite side of the rotator or the stator are at a certain distance lower than the same end of the second permanent magnet 32 located in the middle; or may be the end of the first permanent magnet 31, the end of the third permanent magnet 33, the end of the fourth permanent magnet 34 and the end of the five permanent magnet 35 close to the opposite side of the rotator or the stator are at a certain distance lower than the same end of the second permanent magnet 32 located at the middle, as described in Fig.7B.

In some preferred embodiments, the height ratio of the permanent magnets located at both sides to the height of the permanent magnet located in the middle includes: 1:1.5 to 1:1.9. As shown in Fig.5, the height ratio of the height of the first permanent 31 and the third permanent magnet 33 to the height of the second permanent magnet 32 preferably includes 1:1.5 to 1:1.9.

However, it should be noted that the height ratio of each of the permanent magnets is not limited to the range of values listed above, and there may be other changes depending on the different specifications of the motors and the specifications of the HALBACH array permanent magnets used. It is within the scope of the present disclosure to ensure that the missing portions of the first permanent magnet and the second permanent magnet are part of the range that may be adversely magnetized by magnetic lines of flux.

Fig. 6 is a diagram illustrating changes in magnetic density of each permanent magnet in a HALBACH array permanent magnet according to a width change ratio according to an embodiment of the present disclosure.

In some preferred embodiments, the width of the permanent magnet located in the middle of each of the HALBACH array permanent magnets is greater than the width of the permanent magnets located at both sides, so that a better sinusoidal magnetic field can be generated. As shown in Fig.5 (not part of invention) , it is assumed that the width of the second permanent magnet 32 is P, the width of each of the first permanent magnet 31 and the third permanent magnet 33 is T, and when the ratio of the two is about 2.5, the magnetic moment density is maximum.

It should be noted that the width ratio is not limited to the ratio described above, as long as the width of the second permanent magnet 32 located in the middle is greater than the widths of the first permanent magnet 31 and the third permanent magnet 33 which are located at both sides, it is within the scope of a preferred embodiment of the disclosure.

When more than 5 permanent magnets are included in the HALBACH array permanent magnet, the other permanent magnets can be referred to the related design of the second and third permanent magnets.

### Embodiment 2

The second embodiment of the present invention further provides an apparatus, wherein the apparatus includes the motor of the first embodiment.

The motor is described in the first embodiment, and the details are not repeated herein.

In the above embodiments, the descriptions of the various embodiments are different, and the parts that are not described in detail in a certain embodiment can be referred to the related description of other embodiments.

It should be noted that those skilled in the art should also understand that the embodiments described in the specification are all exemplary embodiments, and the structures and modules involved are not necessarily required by the present disclosure.

The motor comprising the HALBACH array and the apparatus comprising same provided by the embodiments of the present disclosure are described in detail above, but the description of the above embodiments is only for helping to understand the method and the core idea of the present invention, and should not be construed as the limits of the present disclosure. Those skilled in the art, in light of the principle of the present disclosure, are susceptible to variations and substitutions within the scope of the present invention as defined in the claims.

## Claims

1. A motor comprising HALBACH array, the motor comprising an assembly of a stator (10) and a rotator (20), a plurality of tooth (11, 21) structures and groove (12, 22) structures are formed on the opposite surfaces of the stator (10) and the rotator (20), **characterized in that**, the motor further comprises a plurality of HALBACH array permanent magnet units (30) distributed in the plurality of grooves (12, 22) of the stator (10) and the rotator (20).

2. The motor comprising HALBACH array according to claim 1, wherein each of the HALBACH array permanent magnet units (30) has the same shape, and a direction of a formed single-sided magnetic field corresponds to a gap between the rotator (10) and the stator (20).

3. The motor comprising HALBACH array according to claim 1 or 2, wherein one end of permanent magnets (31, 33) at least located at both sides of the HALBACH array permanent magnet units (30) distributed in each of the grooves (12, 22) which is close to the opposite surface of the stator (10) or the rotator (20) is at a distance lower than the same end of a permanent magnet (32) located in the middle.

4. The motor comprising HALBACH array according to claim 3, wherein a height ratio of the height of each of the permanent magnets (31, 33) located at both sides to the height of the permanent magnet (32) located in the middle is in a range of 1:1.5 to 1:1.9.

5. The motor comprising HALBACH array according to claim 1 or 2, wherein a magnetic flux direction of the permanent magnet (32) located in the middle of each of the HALBACH arrays is perpendicular to the opposite surface of the stator (10) or the rotator (20), and magnetic flux directions of the permanent magnets (31, 33) respectively located at right and left sides are symmetrical or antiparallel to each other.

6. The motor comprising HALBACH array according to claim 1 or 2, wherein a width of the permanent magnet (32) located in the middle of each of the HALBACH array permanent magnet units (30) is larger than a width of each of the permanent magnets (31, 33) located at both sides of each of the HALBACH array permanent magnet units (30).

7. The motor comprising HALBACH array according to claim 6, wherein a ratio of the width of the permanent magnet (32) located in the middle to the width of each of the permanent magnets (31, 33) located at both sides is 2.5:1.

8. The motor comprising HALBACH array according to claim 1 or 2, wherein each of the HALBACH array permanent magnet units (30) comprises: at least a first permanent magnet (31), a second permanent magnet (32), and a third permanent magnet (33) which are arranged in a lateral direction.

9. The motor comprising HALBACH array according to claim 1 or 2, wherein the plurality of HALBACH array permanent magnet units (30) distributed in the plurality of grooves (12, 22) of the stator (10) and the rotator (20) comprise:
a HALBACH array permanent magnet unit distributed in each groove or in every several grooves; or
a plurality of HALBACH array permanent magnet units distributed in each groove or in every several grooves.

10. An apparatus comprising the motor comprising HALBACH array according to anyone of claims 1 to 9.

## Patentansprüche

1. Motor mit HALBACH-Array, wobei der Motor eine Anordnung aus einem Stator (10) und einem Rotator (20) umfasst, wobei eine Vielzahl von Strukturen mit Zahn (11, 21) und Nut (12, 22) auf den gegenüberliegenden Oberflächen des Stators (10) und des Rotators (20) ausgebildet sind, **dadurch gekennzeichnet, dass** der Motor weiterhin eine Vielzahl von HALBACH-Array-Permanentmagneteinheiten (30) umfasst, die in der Vielzahl von Nuten (12, 22) des Stators (10) und des Rotators (20) verteilt sind.

2. Motor mit HALBACH-Array nach Anspruch 1,
wobei jede der HALBACH-Array-Permanentmagneteinheiten (30) die gleiche Form hat und eine Richtung eines geformten einseitigen Magnetfeldes einem Spalt zwischen dem Rotator (10) und dem Stator (20) entspricht.

3. Motor mit HALBACH-Array nach Anspruch 1 oder 2,
wobei ein Ende von Permanentmagneten (31, 33), die sich zumindest an beiden Seiten der HALBACH-Array-Permanentmagneteinheiten (30) befinden, die in jeder der Nuten (12, 22) verteilt sind, das sich nahe der gegenüberliegenden Oberfläche des Stators (10) oder des Rotators (20) befindet, einen geringeren Abstand aufweist als das gleiche Ende eines Permanentmagneten (32), der sich in der Mitte befindet.

4. Motor mit HALBACH-Array nach Anspruch 3,
wobei ein Höhenverhältnis der Höhe eines jeden der Permanentmagnete (31, 33), die sich an beiden Seiten befinden, zur Höhe des Permanentmagneten (32), der sich in der Mitte befindet, in einem Bereich von 1:1,5 bis 1:1,9 liegt.

5. Motor mit HALBACH-Array nach Anspruch 1 oder 2,
wobei eine magnetische Flussrichtung des Permanentmagneten (32), der sich in der Mitte eines jeden der HALBACH-Arrays befindet, senkrecht zu der gegenüberliegenden Oberfläche des Stators (10) oder des Rotators (20) ist, und die magnetischen Flussrichtungen der Permanentmagnete (31, 33), die sich jeweils an der rechten und linken Seite befinden, symmetrisch oder antiparallel zueinander sind.

6. Motor mit HALBACH-Array nach Anspruch 1 oder 2,
wobei eine Breite des Permanentmagneten (32), der sich in der Mitte jeder der HALBACH-Array-Permanentmagneteinheiten (30) befindet, größer ist als eine Breite eines jeden der Permanentmagneten (31, 33), die sich an beiden Seiten jeder der HALBACH-Array-Permanentmagneteinheiten (30) befinden.

7. Motor mit HALBACH-Array nach Anspruch 6,
wobei das Verhältnis der Breite des Permanentmagneten (32), der sich in der Mitte befindet, zur Breite eines jeden der Permanentmagnete (31, 33), die sich an beiden Seiten befinden, 2,5:1 beträgt.

8. Motor mit HALBACH-Array nach Anspruch 1 oder 2,
wobei jede der HALBACH-Array-Permanentmagneteinheiten (30) umfasst: mindestens einen ersten Permanentmagneten (31), einen zweiten Permanentmagneten (32) und einen dritten Permanentmagneten (33), die in einer seitlichen Richtung angeordnet sind.

9. Motor mit HALBACH-Array nach Anspruch 1 oder 2,
wobei die Vielzahl von HALBACH-Array-Permanentmagneteinheiten (30), die in der Vielzahl von Nuten (12, 22) des Stators (10) und des Rotators (20) verteilt sind, umfasst:
eine HALBACH-Array-Permanentmagneteinheit, die in jeder Nut oder in allen paar Nuten verteilt ist; oder
eine Vielzahl von HALBACH-Array-Permanentmagneteinheiten, die in jeder Nut oder in allen paar Nuten verteilt sind.

10. Vorrichtung, die den Motor mit HALBACH-Array nach einem der Ansprüche 1 bis 9 umfasst.

## Revendications

1. Moteur comprenant un réseau de HALBACH, le moteur comprenant un assemblage constitué d'un stator (10) et d'un rotor (20), une pluralité de structures de dents (11, 21) et de structures de rainures (12, 22) étant formées sur les surfaces opposées du stator (10) et du rotor (20), **caractérisé en ce que** le moteur comprend en outre une pluralité d'unités à aimants permanents en réseau de HALBACH (30) distribuées dans la pluralité de rainures (12, 22) du stator (10) et du rotor (20).

2. Moteur comprenant un réseau de HALBACH selon la revendication 1, dans lequel chacune des unités à aimants permanents en réseau de HALBACH (30) a la même forme, et une direction d'un champ magnétique unilatéral formé correspond à un intervalle entre le rotor (10) et le stator (20).

3. Moteur comprenant un réseau de HALBACH selon la revendication 1 ou 2, dans lequel une extrémité d'aimants permanents (31, 33) au moins située au niveau des deux côtés des unités à aimants permanents en réseau de HALBACH (30) distribuées dans chacune des rainures (12, 22) qui est proche de la surface opposée du stator (10) ou du rotor (20) est à une distance inférieure à la même extrémité d'un aimant permanent (32) situé au milieu.

4. Moteur comprenant un réseau de HALBACH selon la revendication 3, dans lequel un rapport de hauteur de la hauteur de chacun des aimants permanents (31, 33) situés au niveau des deux côtés sur la hauteur de l'aimant permanent (32) situé au milieu est dans une plage de 1:1,5 à 1:1,9.

5. Moteur comprenant un réseau de HALBACH selon la revendication 1 ou 2, dans lequel une direction de flux magnétique de l'aimant permanent (32) situé au milieu de chacun des réseaux de HALBACH est perpendiculaire à la surface opposée du stator (10) ou du rotor (20), et des directions de flux magnétique des aimants permanents (31, 33) situés respectivement au niveau des côtés de droite et de gauche sont symétriques ou antiparallèles les unes aux autres.

6. Moteur comprenant un réseau de HALBACH selon la revendication 1 ou 2, dans lequel une largeur de l'aimant permanent (32) situé au milieu de chacune des unités à aimants permanents en réseau de HALBACH (30) est plus grande que la largeur de chacun des aimants permanents (31, 33) situés au niveau des deux côtés de chacune des unités à aimants permanents en réseau de HALBACH (30).

7. Moteur comprenant un réseau de HALBACH selon la revendication 6, dans lequel un rapport de la largeur de l'aimant permanent (32) situé au milieu sur la largeur de chacun des aimants permanents (31, 33) situés au niveau des deux côtés est de 2,5 :1.

8. Moteur comprenant un réseau de HALBACH selon la revendication 1 ou 2, dans lequel chacune des unités à aimants permanents en réseau de HALBACH (30) comprend : au moins un premier aimant permanent (31), un deuxième aimant permanent (32) et un troisième aimant permanent (33) qui sont agencés dans une direction latérale.

9. Moteur comprenant un réseau de HALBACH selon la revendication 1 ou 2, dans lequel la pluralité d'unités à aimants permanents en réseau de HALBACH (30) distribuées dans la pluralité de rainures (12, 22) du stator (10) et du rotor (20) comprennent :
une unité à aimants permanents en réseau de HALBACH distribuée dans chaque rainure ou toutes les plusieurs rainures ; ou
une pluralité d'unités à aimants permanents en réseau de HALBACH distribuées dans chaque rainure ou toutes les plusieurs rainures.

10. Appareil comprenant le moteur comprenant un réseau de HALBACH selon l'une quelconque des revendications 1 à 9.
